(19) Europäisches Patentamt
European Patent Office
Office européen des brevets

(11) **EP 2 718 709 B1**

(12) **EUROPEAN PATENT SPECIFICATION**

(45) Date of publication and mention
of the grant of the patent:
**10.08.2016 Bulletin 2016/32**

(21) Application number: **12796973.1**

(22) Date of filing: **08.06.2012**

(51) Int Cl.:
***G01N 30/38*** *(2006.01)*     ***B01L 3/00*** *(2006.01)*

(86) International application number:
**PCT/US2012/041451**

(87) International publication number:
**WO 2012/170756 (13.12.2012 Gazette 2012/50)**

(54) **REDUCING DISPERSION DUE TO VIAS IN PLANAR MICROFLUIDIC SEPARATION DEVICES**

DISPERSIONSVERRINGERUNG DURCH KONTAKTLÖCHER IN PLANAREN MIKROFLUIDTRENNVORRICHTUNGEN

RÉDUCTION DE DISPERSION DUE AUX TROUS DE LIAISON DANS DES DISPOSITIFS PLANS DE SÉPARATION MICROFLUIDIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2011   US 201161495043 P**

(43) Date of publication of application:
**16.04.2014   Bulletin 2014/16**

(73) Proprietor: **Waters Technologies Corporation Milford, MA 01757 (US)**

(72) Inventor: **BUNNER, Bernard
Cambridge, MA 02139 (US)**

(74) Representative: **Harding, Andrew Philip
Forresters
Skygarden
Erika-Mann-Strasse 11
80636 München (DE)**

(56) References cited:
**WO-A1-2008/142160      US-A1- 2004 000 519
US-A1- 2004 000 519      US-A1- 2004 053 422
US-A1- 2005 257 885      US-A1- 2011 042 279
US-A1- 2011 042 279**

- **BRIAN M. PAEGEL ET AL: "Turn Geometry for Minimizing Band Broadening in Microfabricated Capillary Electrophoresis Channels", ANALYTICAL CHEMISTRY, vol. 72, no. 14, 15 July 2000 (2000-07-15) , pages 3030-3037, XP055149059, ISSN: 0003-2700, DOI: 10.1021/ac000054r**

**Description**

TECHNICAL FIELD

This invention relates to reducing dispersion due to vias in planar microfluidic separation devices.

BACKGROUND

An objective of chemical separation techniques such as high-performance liquid chromatography (HPLC) and capillary electrophoresis (CE) is to separate different components of a mixture of chemical species based, for example, on differential chemical affinity with a stationary phase or differential migration velocity in a gel. The result of a separation is typically a chromatogram (HPLC) or electropherogram (CE) showing a series of peaks eluting at different times from the separation column or channel and detected by a variety of techniques such as UV absorbance, laser-induced fluorescence, or mass spectrometry. The quality of the separation is considered highest when the peaks are sharpest.

While chemical selectivity is a motive force of separation technologies, dispersion is a key physical phenomenon that causes peaks to become broader. The second principle of thermodynamics implies that the molecules in a narrow band of analyte will redistribute themselves spatially through diffusion and convection so that an initially sharp peak will gradually broaden as it travels through a chromatographic system. Understanding and minimizing dispersion is a key concern for separation scientists.

Modem liquid chromatography separations for analytical applications (as opposed to preparative applications) are typically conducted in stainless steel tubes of inner diameter between 1.0 and 4.6 mm and length between 5 and 15 cm. These tubes, or columns, are packed with porous particles of average diameter 1.7 to 3.5 microns. Frits are placed at both ends of the columns to hold the particles in place and prevent loosening of the packed bed when fluids flow through the packed bed. The immobile packed bed of porous particles is commonly referred to as stationary phase, with a fluid flowing through it referred to as mobile phase. Tubes of inner diameter 0.250 mm or smaller are typically attached through threaded ports at both ends of the column, referred to as inlet and outlet. An inlet tube is typically connected between the inlet of the column and an injection valve and pump, which are arranged upstream of the column. The pump delivers a flow of mobile phase at a specified flow rate, which is typically constant throughout a separation. In the case of reversed-phase liquid chromatography (RP-LC), which is a common modality of LC, the mobile phase is typically a mixture of water and an organic solvent such as acetonitrile in a composition that is either fixed (isocratic separation) or varies in linear fashion (gradient separation). The injection valve injects into the mobile phase a plug or band of the mixture of chemical species that is to be separated. This band travels with the mobile phase to the column, where its components are separated. An outlet tube connected to the outlet of the column transports the separated components to a detector (e.g., a UV detector or mass spectrometer).

Dispersion in a homogeneous packed bed can be represented and calculated by the Van Deemter model. After a peak or band has travelled a distance $L$, it has broadened and its width can be quantified by its spatial variance $\sigma_L^2$ or temporal variance $\sigma_t^2 = \sigma_L^2 / u^2$, where $u$ is the linear velocity, defined below. Two common metrics of band broadening are the plate height, defined as $H = \sigma_L^2 / L = u^2 \sigma_t^2 / L$, and the plate count, defined as $N = L/H$. Separation scientists seek to minimize band broadening, and therefore minimize the plate height H and maximize the plate count N. A commonly used Van Deemter model predicts that

$$H = 1.5 d_p + \frac{D_{mol}}{u} + \frac{d_p^2 u}{6 D_{mol}},$$

where $d_p$ is the average particle diameter, $D_{mol}$ is the molecular diffusion coefficient of an analyte (sample), and $u$ is the linear velocity of the mobile phase. The linear velocity is itself calculated as $u = U_s/\varepsilon_t$, where $U_s = Q / A$ is the superficial velocity in the bed, $Q$ is the flow rate of the mobile phase, $A$ is the cross-sectional area of the column, and $\varepsilon_t$ is the total porosity of the packed bed. Since the particles are porous, the total porosity is the sum of the intraparticle porosity and interparticle porosity (the volume between particles when they are considered as solid spheres).

In the Van Deemter model, the three terms account respectively for non-uniformities in the packed bed, dispersion in the mobile phase between particles, and mass transfer to the stationary phase of the porous particles. The model illustrates that dispersion is caused to a significant extent by the geometry of the separation medium, not only by the diffusion of the analyte in the mobile phase. The $1.5d_p$ term assumes that the bed is well-packed. If this is not the case, the constant could be larger than 1.5. In cases where the separation medium is a regular, ordered array of pillars fabricated using photolithographic methods, as opposed to a packed bed where the particles are arranged randomly in space, the constant could be significantly lower (see, e.g., US 6,595,144 B1; see also "Advantages of perfectly ordered 2D porous pillar arrays over packed bed columns for LC separations: A theoretical analysis" P. Gzil, N. Vervoort, G. Baron, G. Desmet, Analytical Chemistry 2003, 75, 6244-6250).

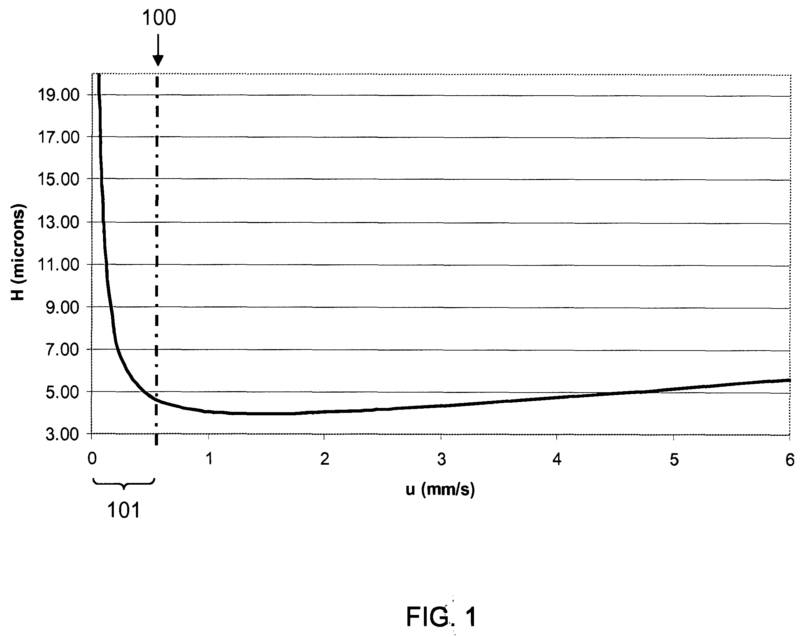

To provide an illustrative example, the plate height H predicted by the van Deemter model, also referred to as the van Deemter curve, is plotted in FIG. 1 versus the linear velocity $u$, for the following parameters: $d_p$=1.7 micron, $\varepsilon_t$=0.7, 2.1 mm column diameter, a mobile phase consisting of 40% water and 60% acetonitrile, $D_{mol}$=10$^{-9}$ m$^2$/s (a value representative of a typical small molecule compound such as hexanophenone). The minimum plate height is $H_{min}$=3.94 microns, for $u$=1.347 mm/s or $Q$=4 microliter/min. Notice the steep rise in $H$ when $u$ is very small, due to the $D_{mol}/u$ term of the van Deemter equation, indicating that the dominant contributor to dispersion is the physical diffusion of the analyte in the mobile phase. It can be important for the design of separation device to stay away from this region, marked as 101 in FIG. 1, which can be defined somewhat arbitrarily as $u$<0.5 mm/s, as indicated by line 100. In usual HPLC practice, the Van Deemter model is used to obtain one plate height or one plate count for an entire column. This makes sense when the packed bed and the linear velocity are approximately uniform over the entire volume of the column. However, the model also applies locally to a small part of the packed bed and is fully adequate for calculating dispersion in situations where the geometry of the column is different from a tube or where the linear velocity varies over the packed bed.

In some applications, notably when the amount of sample is limited, or when it is desired to interface the LC column to a mass spectrometer (MS), it is advantageous to use columns with smaller inner diameters, typically ranging from 75 to 300 microns, with associated mobile phase flow rates of typically less than 12 microliters/min. This scale of chromatography is usually referred to as microscale or nanoscale chromatography. It can be difficult to make columns out of metallic tubes with the dimensional consistency and surface finish required for high-quality HPLC. Typically, 75 to 150 micron ID columns are made out of fused silica and 300 micron ID columns are made out of polyether-ether-ketone, such as PEEK polymer (available from Victrex PLC, Lancashire, United Kingdom). Although it is possible to achieve high quality separations with minute amounts of sample, the challenges associated with minimizing extra-column band broadening due to tubing and fluidic connections, in particular with avoiding dead volumes, have limited the use of such columns to specialized applications such as proteomics.

Within the field of microscale or nanoscale chromatography, planar microfluidic devices have been gaining interest in recent years as alternatives to stainless steel, PEEK, or fused silica tubes traditionally used for HPLC and CE. CE microchips fabricated in glass or polymers allow to create smaller injection plugs, to better dissipate heat arising from Joule heating, and to integrate multiple parallel separation channels into a single planar device. Likewise, in the HPLC and ultra-performance liquid chromatography (UPLC™) realm, microchips have several advantages over commercially available tubular columns made out of fused silica or PEEK. Those advantages include the integration of a trapping channel on the same device as the analytical channel with minimum dead volume between the two channels, better ease of use, reduction of fluid connections and associated dead volume, and reduced risk of leakage.

SUMMARY

The invention arises, in part, from the realization that dispersion, and therefore loss of separation performance or efficiency in a planar microfluidic chemical separation device can be reduced by reducing the fluid transport volume in regions of via-channel transition. This can be achieved by decreasing the diameter of the via, and, in some cases, narrowing or tapering the channel entrance, i.e., the region where the via and the channel join.

One aspect of the invention provides a planar microfluidic chemical separation device. The device includes a separation channel that is located in the plane of the device. The device also includes one or more vias situated perpendicular to the separation channel. The vias extends between the separation channel and an outer surface of the substrate for fluid communication with the separation channel. The vias have cross-sectional areas that are substantially less than a cross-sectional area of a first region of the separation channel to inhibit band-broadening caused by passage of a sample band through the one or more vias.

Another aspect of the invention features a method that includes delivering a mobile phase fluid carrying a sample band through a first via in a substrate so as to drive the sample through a separation channel defined by the substrate, such that components of the sample band are separated and subsequently driven out through a second via in the substrate. The first and second vias have cross-sectional areas that are substantially less than a cross-sectional area of a first region of the separation channel thereby inhibiting band-broadening caused by passage of the sample band through the first and second vias.

In another aspect, the invention features a method of forming a planar microfluidic chemical separation device. The method includes forming a pair of vias in a first substrate layer; forming a first groove in a second substrate layer; and connecting the first substrate layer and the second substrate layer to form a substrate and such that the first groove forms at least a portion of an enclosed separation channel and the vias allow for fluid communication with the separation channel. The vias have cross-sectional areas that are substantially less than a cross-sectional area of a first region of the separation channel thereby inhibiting band-broadening caused by passage of a sample band through the vias.

Implementations may include one or more of the following features.

In some implementations, the cross-sectional areas of the vias are 1.7 times to 9.0 times smaller (e.g., 4.0 times smaller) than the cross-sectional area of the first region of the separation channel.

In certain implementations, the first region of the separation channel has a cross-sectional area of 0.07 square millimeters to 0.20 square millimeters. That is, the first region of the separation channel can have a cross-sectional area that corresponds to that of a 300 micron to 500 micron diameter column.

In some implementations, the separation channel has a length of 5 cm to 25 cm, e.g., 10 cm.

The separation channel is configured to perform a chromatographic separation.

In some implementations, the first region of the separation channel accounts for 90% to 99% of the length of the channel.

In certain implementations, the separation channel also includes one or more transition regions which interface with and taper towards the vias. The transition regions account for 1% to 10% of the length of the channel.

In some implementations, the separation channel has a second region extending between the first region and the vias, the second region having a channel width that narrows towards a junction with the vias.

In certain implementations, the second region has a channel height that narrows towards a junction with the vias.

In some implementations, the separation channel has transition regions extending between the first region and the vias. The second regions have a channel height that narrows towards a junction with the via. In some examples, the separation channel narrows from a first channel height in the first region to a second channel height in the transition regions that is 10% to 50% smaller (e.g., 25% smaller) than the first channel height.

In certain implementations, the substrate includes porous particles disposed within the separation channel.

In some implementations, the substrate includes a first substrate layer defining at least part of the separation channel and a second substrate layer which overlies the first substrate layer and defines the via.

In certain implementations, the separation channel has a square or rectangular cross-sectional shape.

In some implementations, the separation channel has a rounded cross-sectional shape.

In certain implementations, the separation channel terminates at a rounded corner at the junction with the via for inhibiting stagnation of fluid flow at the junction.

In some implementations, tapered regions are formed at terminal ends of the first groove such that the separation channel tapers in transition regions interfacing with the vias.

In certain implementations, a second groove is formed in the first substrate layer such that, when the first and second substrate layers are connected, the first and second grooves together form the enclosed separation channel.

In some implementations, tapered regions are formed at terminal ends of the second groove such that separation channel tapers in transition regions interfacing with the vias.

In certain implementations, tapered regions are formed at terminal ends of the first and second grooves such that separation channel tapers in transition regions interfacing with the vias.

Implementations can provide one or more of the following advantages.

In some implementations, the penalty in chromatographic performance due to the transition between vias and channels in planar microfluidic chemical separation devices can be reduced.

In certain implementations, sample band broadening is reduced in regions of via - channel transition.

In some implementations, planar microfluidic separation devices are provided with performance characteristics that are the substantially the same as those of convention straight separation columns.

Other aspects, features, and advantages are in the description, drawings, and claims.

BRIEF DESCRIPTION OF THE DRAWINGS

FIG. 1 is graph showing plate height H, as predicted by the van Deemter model, plotted against linear velocity *u.*

FIG. 2 is a perspective view of a planar microfluidic chemical separation device.

FIG. 3 shows the results of a numerical simulation that models flow of a sample band through a via and a 5 millimeter long section of a separation channel, in which the cross-sectional areas of the via and the separation channel are equal to that of a tube of 300 microns.

FIG. 4 is a plot showing peak profiles measured at the inlet and outlet of the model of FIG. 3 compared against the peak profiles at the inlet and outlet of a straight column with an fluid pathway of equal length.

FIG. 5 is a series of side views of the model of FIG. 3 showing the shape of the sample band at different times as it passes through the via and enters the separation channel.

FIG. 6 is a graph showing linear velocity along line 305 in FIG. 5.

FIG. 7 shows the results of a numerical simulation that models flow of a sample band through a via and a 5 millimeter long section of a separation channel, where the via has a cross-sectional area that is 4 times smaller than that of the separation channel.

FIG. 8 shows the results of a numerical simulation that models flow of a sample band through a via and a 5 millimeter long section of a separation channel, where the via has a cross-sectional area that is 4 times smaller than that of a first region of the separation channel, and, in a second region, the width of the separation channel narrows down as it joins the via.

FIG. 9 shows the results of a numerical simulation that models flow of a sample band through a via and a 5 millimeter long section of a separation channel, where the via has a diameter of 150 microns and the separation channel has a width and a height of 265 microns in a first region, and, in a second region, close to the via, the height and width of the separation channel taper linearly to 150 microns.

FIG. 10 shows the results of a numerical simulation that models flow of a sample band through a via and a 5 millimeter long section of a separation channel, where the via has a diameter of 170 microns and the width and height of the separation channel in a first region are 350 microns and 200 microns, respectively, and, in a second region, close to the via, the height and width of the separation channel taper linearly to 170 microns and 125 microns, respectively.

FIG. 11A is side view of the model of FIG. 10.

FIG. 11B is a graph showing linear velocity along line 1003 in FIG. 11A.

FIG. 12A shows the results of a numerical simulation that models flow of a sample band through a via and a 5 millimeter long section of a separation channel, where the channel has an approximately semi-elliptical cross-section which narrows as it joins the via.

FIG. 12B shows the approximately semi-elliptical cross-sectional shape of the separation channel of FIG. 12A.

FIG. 13A is a side view of the model of FIG. 12A.

FIG. 13B is a graph showing linear velocity along line 1205 in FIG. 13A.

FIG. 14A shows the results of a numerical simulation that models flow of a sample band through a via and a 5 millimeter long section of a separation channel, where the channel has an approximately elliptical cross-section which narrows as it joins the via.

FIG. 14B shows the approximately elliptical cross-sectional shape of the separation channel of FIG. 14A.

Like reference numbers indicate like elements.

## DETAILED DESCRIPTION

The invention aims at reducing fluid transport volume in regions of via - channel transition in planar microfluidic separation devices, thereby to reduce the band-broadening that is caused by passage of a sample band through those regions. This can be achieved by decreasing the diameter of the via, and, in some cases, narrowing or tapering the channel entrance, i.e., the region where the via and channel join.

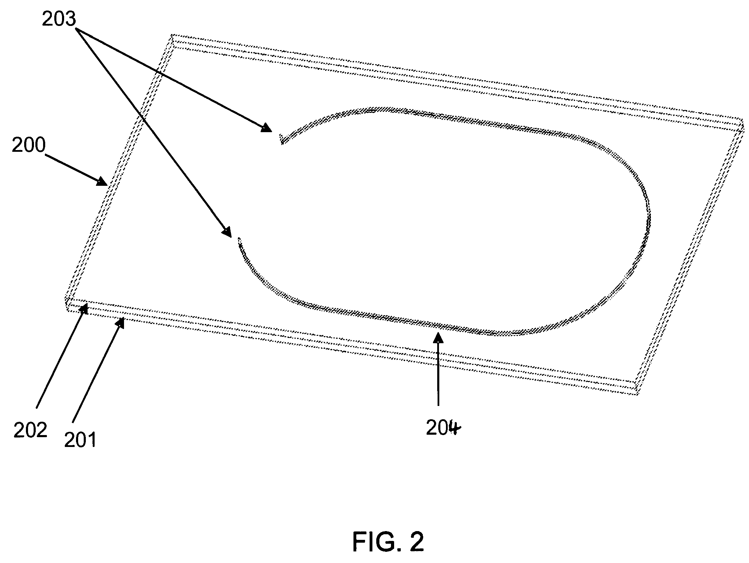

FIG. 2 illustrates a planar microfluidic chemical separation device 200, which is a substrate that consists of a first substrate layer 201 and a second substrate layer 202. The first substrate layer 201 can be formed of polyimide, ceramic, metal, or combinations thereof and includes a groove, which can be formed in the first substrate layer 201, e.g., by machining, chemical etching, or laser ablation. The second substrate layer 202 can also be formed of a polyimide, ceramic, metal, or combinations thereof, and is generally the same material as the first substrate layer 201. The second substrate layer 202 includes a pair of vias 203 which can be formed in the second substrate layer 202, e.g., by machining (e.g., drilling), chemical etching, or laser ablation.

The first substrate layer 201 and the second substrate layer 202 are connected together, such as by lamination, welding, or diffusion bonding, to form the substrate. In some cases, the first and second substrate layers 201, 202 are titanium layers which are diffusion bonded together. When the first substrate layer 201 and the second substrate layer 202 are connected together, the second substrate layer 202 overlies the first substrate layer 201 such that the groove forms an enclosed separation channel 204 and the vias 203 allow for fluid communication with the separation channel 204. The separation channel 204 is packed with chromatographic particles and frits are formed at the ends of the separation channel 204 to lock the packed particles in place. The length of the separation channel typically ranges between 5 cm and 25 cm, e.g., 10 cm. The separation channel 204 has two 60° turns and one 180° turn in order to fit a channel of length 10 cm or more into the small size planar substrate, of length 5.0 cm and width 2.5 cm in this example. The width and height of the separation channel 204 are chosen so that the cross-sectional area of the separation channel 204 is equal to that of already commercially available microscale or nanoscale columns, ranging typically between 75 and 300 microns. In this regard, the separation channel 204 has a width of 67 microns to 265 microns and a depth of 67 microns to 265 microns.

In use, an inlet tube is connected between a first one of the vias 203 of the planar microfluidic chemical separation device 200 and an injection valve and pump. The pump delivers a flow of mobile phase at a specified flow rate, which is typically constant throughout a separation. The injection valve injects into the mobile phase a plug or band of the sample. This band travels with the mobile phase to the separation channel 204, where its components are separated. An outlet tube, which is connected to the other one of the vias 203 at the opposite end of the separation channel 204, transports the separated components to a detector (e.g., a UV detector or mass spectrometer), which, in turn, may be connected to a computer data station for recording an electrical signal from the detector and generating a chromatogram.

Notably, the vias 203 are provided with a smaller cross-sectional area than that of the separation channel. For example, the vias can have a cross-sectional area that is 1.7 to 9 times smaller, e.g., 4 times smaller, than the cross-sectional area of the separation channel. This arrangement can help to reduce band-broadening caused by passage of a sample band through the vias.

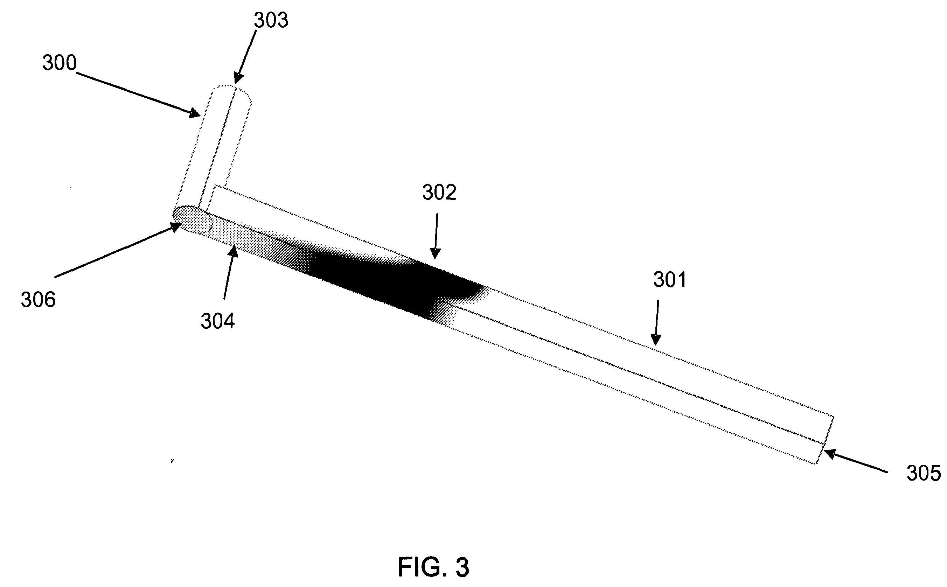

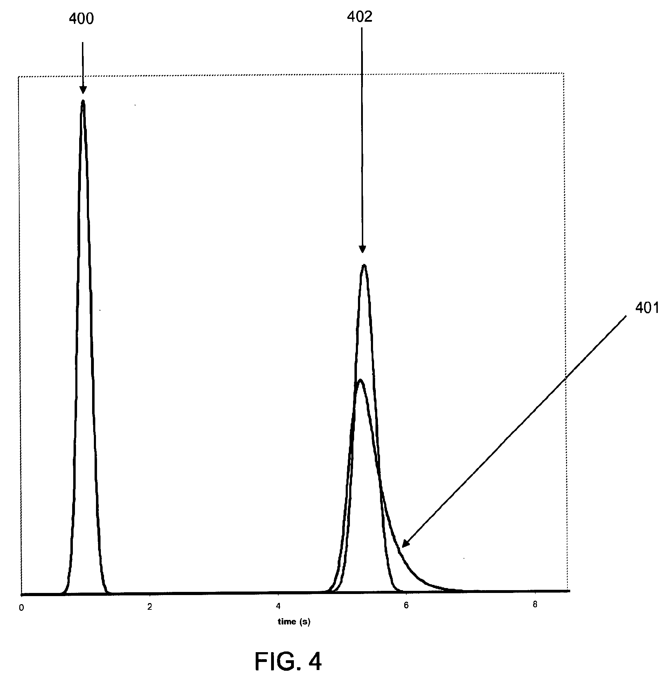

The following examples illustrate the benefits of this type of arrangement by way of comparison with an arrangement in which the channel and vias have the same cross-sectional area. FIG. 3 shows the result of a numerical simulation that models one via 300 and a 5 millimeter long section of a separation channel 301. In this model, both the via 300 and the channel 301 have cross-sectional areas equal to that of a tube of 300 microns. The via 300 has a diameter of 300 microns, and height of 889 microns. The separation channel 301 has width and height of 265 microns. A peak of analyte with a Gaussian profile characterized by a temporal variance $\sigma_{t,0}^2$ is introduced at the inlet 303 of the via 300. This peak is also shown as the first peak 400 of FIG. 4. Note that "peak" and "band" are used interchangeably to describe a plug of sample. The mobile phase transports the band of analyte towards the outlet 305 of the computational domain. It can be seen that the band 302 is severely distorted after is has transitioned from the via 300 into the separation channel 301, with a substantial tail 304. The peak measured at the outlet 305 is plotted in 401 on FIG. 4. This peak shows clear evidence of tailing. Its temporal variance is calculated and called $\sigma_{t,1}^2$. The difference $\sigma_{t,1}^2 - \sigma_{t,0}^2$

characterizes the amount of band broadening that occurs between the inlet and outlet of the computational domain. This band broadening is the sum of two contributions. The first contribution is the normal band broadening that would occur in a straight column. The second contribution is the extra band broadening specifically due to the via - channel transition.

The first contribution can be calculated by doing a computer simulation of a 300 micron diameter cylindrical tube of length 5.889 mm, equal to the sum of the lengths of the via 300 and channel 301 of FIG. 3. In that simulation, the peak profile at the inlet is the same Gaussian curve that is shown in 400 and the profile at the outlet is the curve 402, which is Gaussian and has temporal variance $\sigma_{t,2}^2$. It is clear that the peak 401 is broader than the peak 402. The difference $\sigma_{t,2}^2 - \sigma_{t,0}^2$ is the normal band broadening occurring in a straight column of length equivalent to the total length of the fluid pathway of Fig. 3. It can in fact be calculated analytically from the Van Deemter equation as $\sigma_{t,2}^2 - \sigma_{t,0}^2 = H \cdot L / u^2$, where L=5.889 mm, since the linear velocity is uniform in a straight tubular column.

Thus, the extra band broadening specifically due to the via - channel transition in the inlet via is calculated as $\Delta\sigma_{t,inlet}^2 = \left(\sigma_{t,1}^2 - \sigma_{t,0}^2\right) - \left(\sigma_{t,2}^2 - \sigma_{t,0}^2\right) = \sigma_{t,1}^2 - \sigma_{t,2}^2$. A similar simulation was performed for the outlet via, in which case the peak is introduced at 305 and exits at 303. It was found that the extra dispersion in the outlet via is equal to the extra dispersion in the inlet via:

$$\Delta\sigma_{t,outlet}^2 = \Delta\sigma_{t,inlet}^2.$$

This allows the effective plate height $H_{eff}$ for an entire device to be calculated as follows. A straight column with the above parameters would have a plate height $H$=3.94 microns, as discussed above. For a planar microfluidic device having a $L$=10 cm long separation channel and two vias of diameter 300 microns as shown in FIG. 3, the effective plate height, calculated using $H_{eff} = H + u^2 \left(\sigma_{t,inlet}^2 + \sigma_{t,outlet}^2\right) / L$, would be $H_{eff}$=6.65 microns compared to 3.94 microns for a straight 300 micron diameter, 10 cm channel with no vias, i.e., a 69% increase compared to a straight column ("plate height penalty"), due solely to the via - channel transition. This example illustrates the computational procedure that is used to predict and quantify extra dispersion. In all cases, for clarity of presentation, the extra dispersion is reported as a percentage penalty compared to the baseline case of a straight column with no via - channel transition. All parameters describing the stationary and mobile phases will be as given above. In this regard, $d_p$=1.7 micron, $\varepsilon_t$=0.7, $D_{mol}$=10$^{-9}$ m$^2$/s.

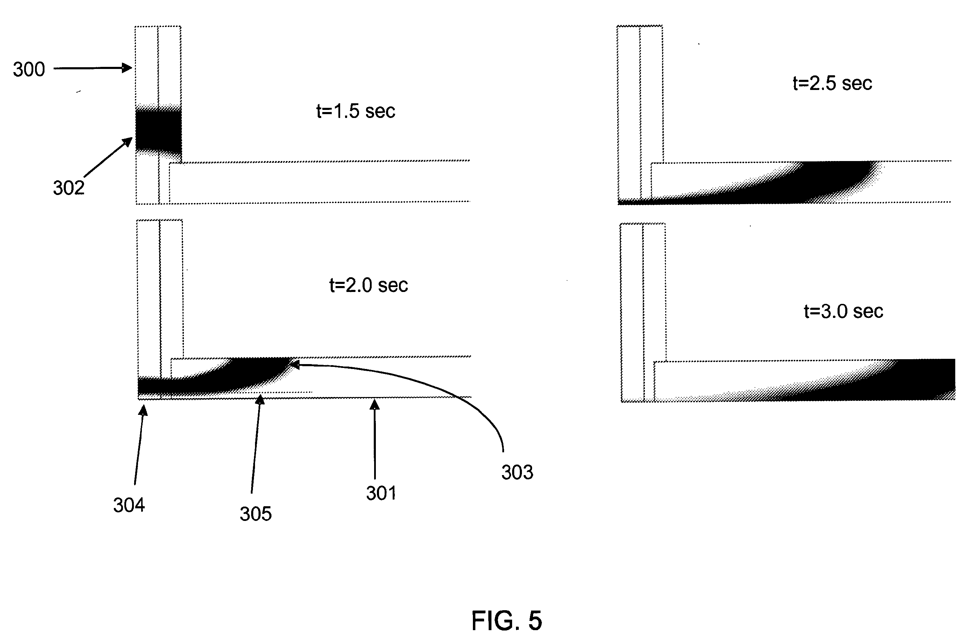

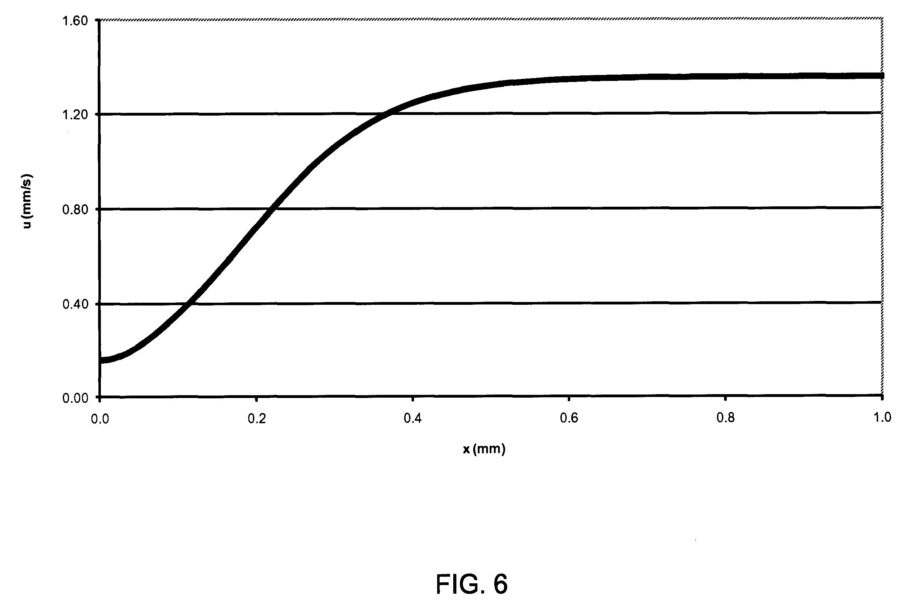

FIG. 5 is a series of side views of the same computational model shown in FIG. 3. It shows the shape of the band at different as it travels through the via 300 and enters the separation channel 301. At t=1.5 s, the band 302 is straight and relatively narrow. At t=2.0 s, the front of the band 303 has advanced into the separation channel whereas the tail of the band 304 is lagging behind. This tailing is accentuated further at t=2.5 and t=3.0 s. The linear velocity along line 305 in FIG. 5, of length 1 mm, is shown in FIG. 6. Away from the via 300, the linear velocity approaches $u$=1.347 mm/s rapidly. Close to the via 300, $u$ is substantially lower. In fact, in the bottom left corner of the via 300, the local linear velocity is zero, indicative of a stagnation point. With reference to the curve of plate height $H$ versus linear velocity $u$ in FIG. 1, very small linear velocities are associated with very large plate heights and therefore very large dispersions. This is the reason for the extra dispersion seen in the region of transition between the via 300 and the separation channel 301.

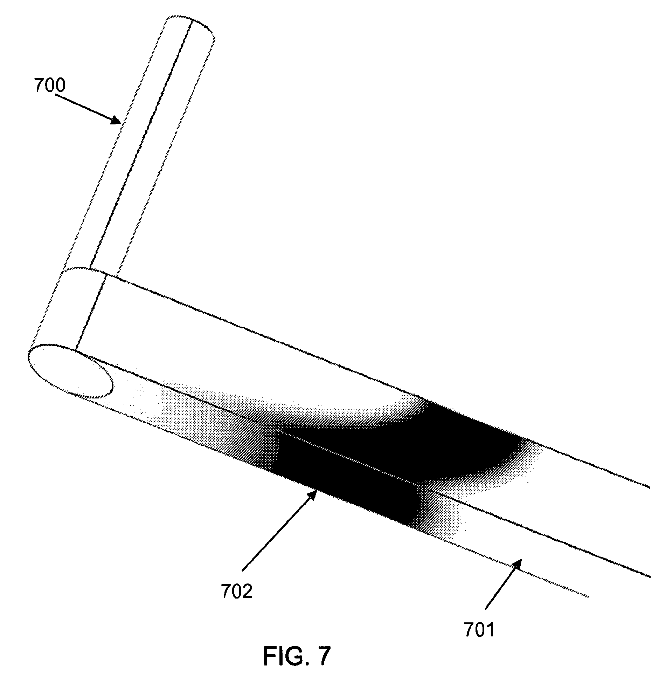

FIG. 7 shows the results of a numerical simulation that models an arrangement in accordance with the invention. In the example of FIG. 7, a separation channel 701 has a width and height of 265 microns, for a cross-sectional area equivalent to that of a cylindrical column of 300 microns, as in FIG. 3, but the via 700 has a diameter of 150 microns, hence a cross-sectional area four times smaller than the via of FIG. 3. Since the flow rate is constant along the flow pathway, the linear velocity in the via 700 is four times larger, 5.388 mm/s, which corresponds to a plate height of 5.33 microns according to the van Deemter model. It can be seen that the band 702 is less distorted than the band 302 of FIG. 3 after it has exited the via 700 and entered the separation channel 701. The overall plate height penalty for a device with a 10 cm long channel and two 150 micron vias is 16.7%, significantly less than the corresponding figure of 69% for 300 micron vias.

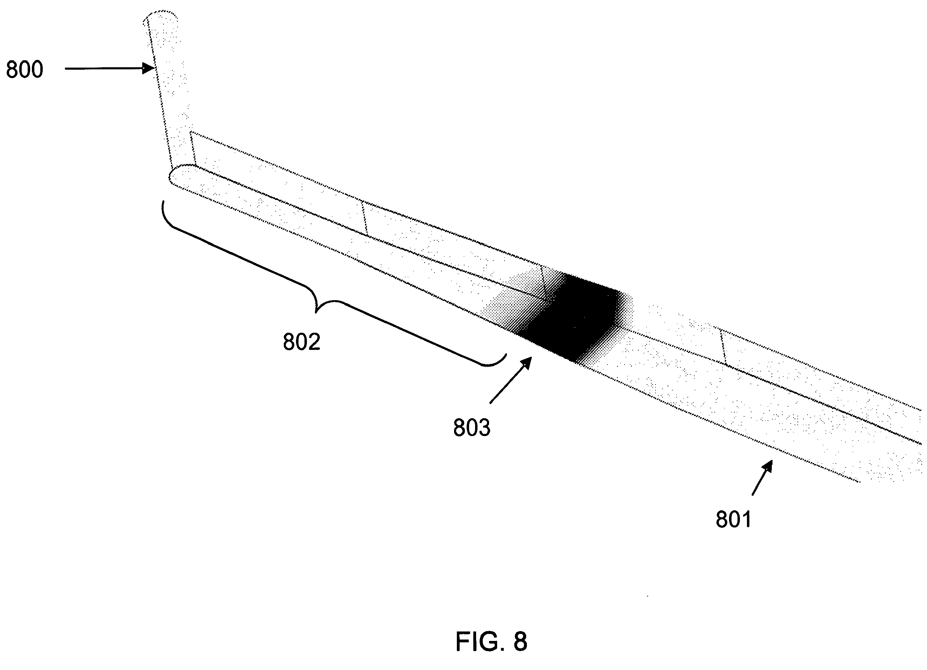

Although an exemplary embodiment been described above, other modifications are possible. For example, in another embodiment, the cross-sectional areas of the vias are smaller than that of the channel, and, in addition, the channel width narrows down as it joins the vias. For example, the vias can have a cross-sectional area that is 1.7 to 9 times smaller, e.g., 4 times smaller, than the cross-sectional area of a first region of the separation channel, and the separation channel can narrow down such that in a second region the width of the separation channel is the same as the diameter of the via. FIG. 8 shows the results of a numerical simulation that models such an arrangement. In the model shown in FIG. 8, the via 800 has diameter 150 microns and the separation channel 801 has width of 353 microns and height of 200 microns along its entire length except in a region 802 close to its end, where it narrows down to 150 microns. The transition occurs over a distance of 0.5 to 5 millimeters. Computer simulations show that a 10 cm long channel having two vias such as shown in FIG. 8 has a plate height penalty of 3.1%. The very small distortion of the band 803 is indicative of the ability of this geometric design to maintain a sharp band and avoid tailing.

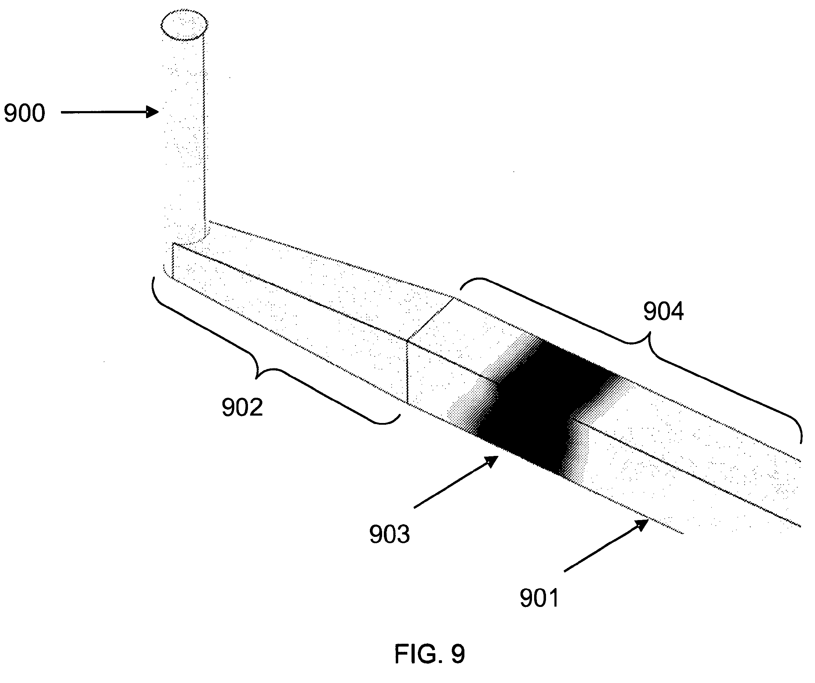

In yet another embodiment, the diameter of the vias is decreased and the separation channel height narrows down as it joins the vias. For example, the separation channel may narrow from a first height in a first region to a second height in a second region, near the via, that is 10% to 50%, e.g., 25%, smaller than the first height. In some cases, taking into account a narrowing of both the width and the height of the separation channel, the separation channel may narrow from a first cross-sectional area in a first region to a second cross-sectional area in a second region, near the via, that is 60% to 70%, e.g., 68%, smaller than the first cross-sectional area. FIG. 9 shows the results of a numerical simulation that models such an arrangement. In FIG. 9, the via 900 has diameter 150 microns and the separation channel 901 has a width and a height of 265 microns in a first region 904. In a second region 902, close to the via 900, the height and width of the separation channel 902 taper linearly to 150 micron height and width. The penalty in plate height is 1.7%. The shape of the analyte band 903 after it has entered the section of the separation channel width and depth 265 microns shows little distortion.

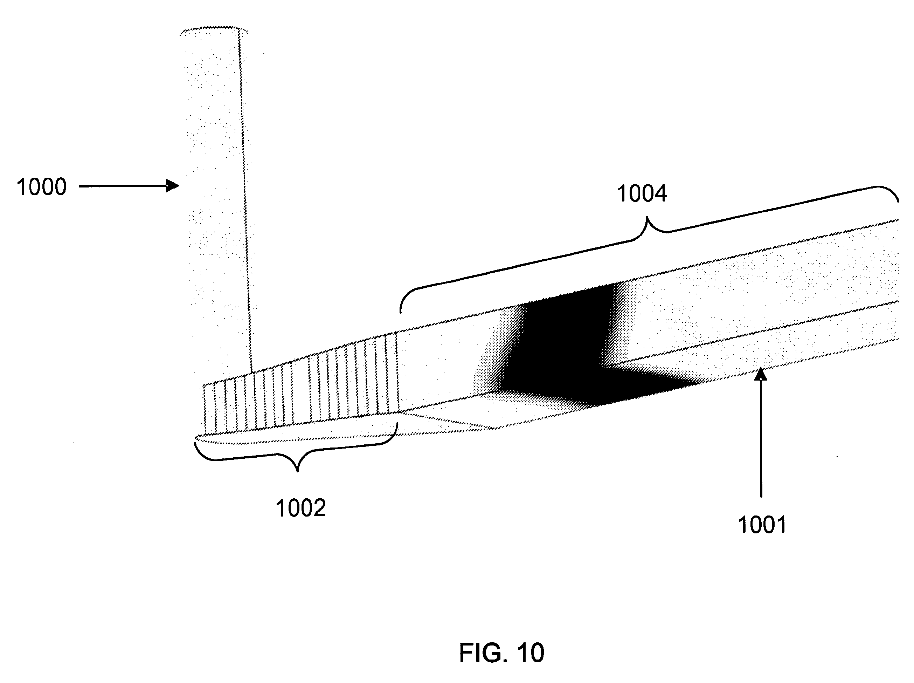

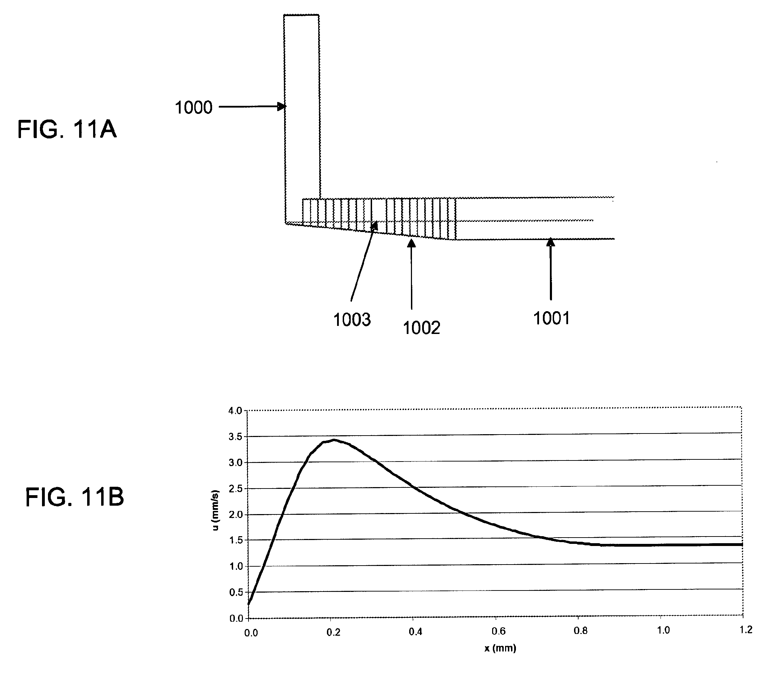

In FIG. 10, the via 1000 has diameter 170 microns. The width of the separation channel 1001 in a first region 1004 is 350 microns and tapers to 170 microns in a second region 1002. The height of the separation channel 1001 in the first region is 200 microns and tapers to 125 microns in the second region 1002. The penalty in plate height is 1.1 %. FIG. 11 A is a side view of the same geometry shown in FIG. 10. The linear velocity along line 1003 is shown in FIG. 11B. The narrowing of the separation channel 1000 at region 1002 creates linear velocities that are greater than the average linear velocity in the channel, 1.347 mm/s. As discussed above, this does not create significant extra dispersion. The minimal extra dispersion is consistent with the observation that the region where the linear velocity is smaller than 0.5 mm/s is very small.

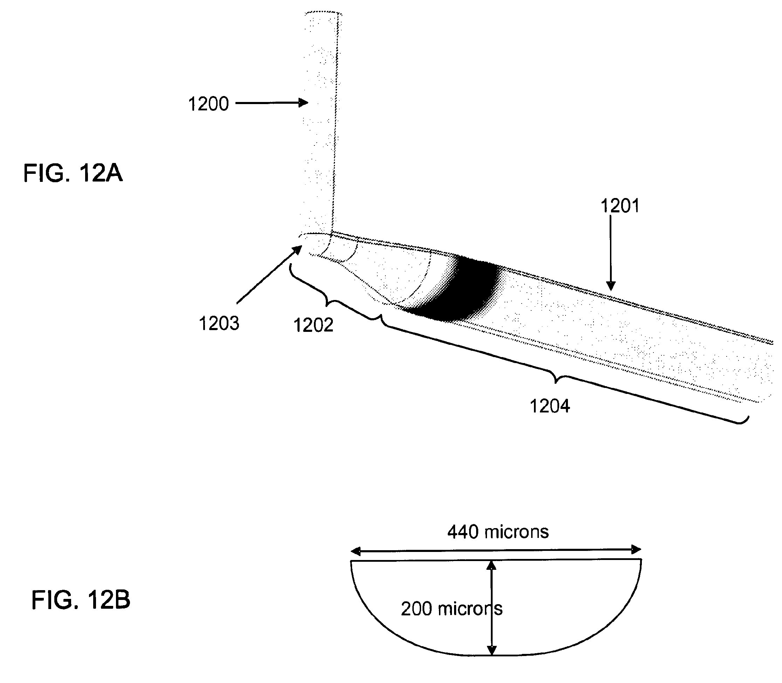

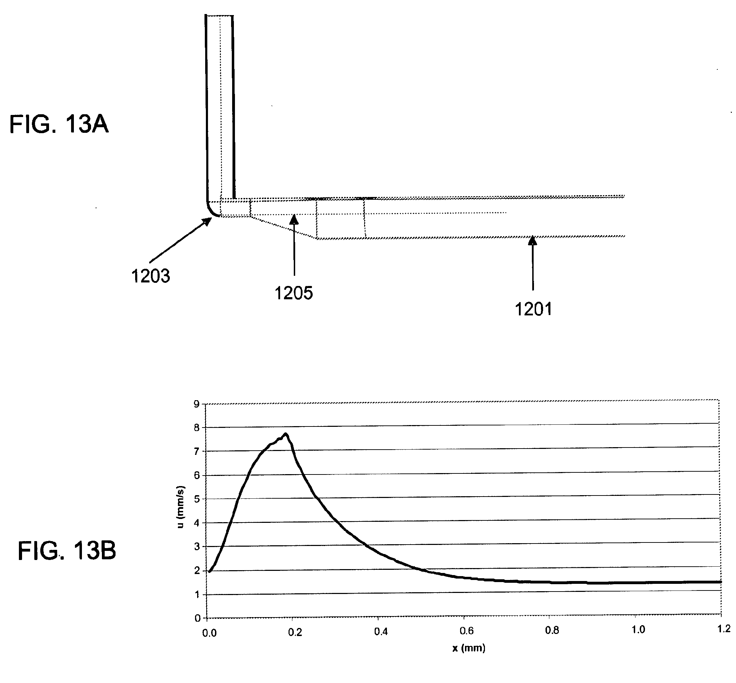

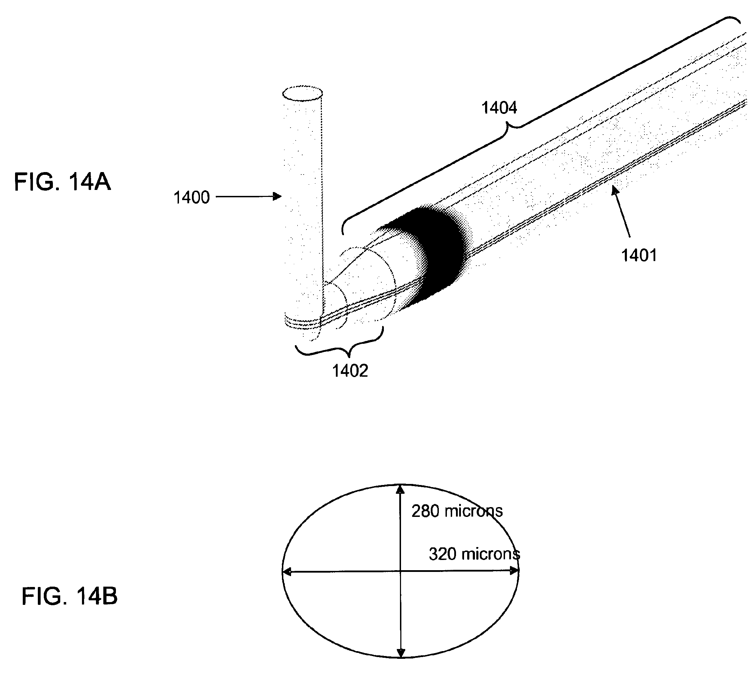

FIGS. 8, 9, and 10 illustrate embodiments in which the cross-section of the separation channel at each axial position along the channel is square or rectangular. FIGS. 12A & 14A show examples in which the separation channel is provided with rounded cross-sections. Referring to FIGS. 12A and 12B, in a first region 1204 the cross-section of the separation channel 1201 is approximately semi-elliptical with depth of 200 microns and width of 440 microns at the top surface. The separation channel 1201 narrows down in region 1202 as it joins with the 150 micron diameter via 1200. The corner 1203 is rounded, so that there is no stagnation point in this geometry where the linear velocity is zero or close to zero, as shown in FIGS. 13A & 13B. FIG. 13A is a side view of the same geometry as in FIG. 12A. FIG. 13B is a plot of the linear velocity along line 1205. Even in corner 1203, the linear velocity is greater than 1.0 mm/s.

Referring to FIGS. 14A & 14B, in a first region 1404 the cross-section of the separation channel 1401, shown in FIG. 14B, is approximately elliptical, with axes of 320 (width) microns and 280 (height) microns. The separation channel 1401 tapers in second region 1402 in both width and height as it joins the via 1400, which has diameter of 170 microns. The penalties in plate height are 0.0% and 0.7% for the designs of FIGS. 12A and 14A, respectively.

A variety of fabrication techniques can be used to create the geometries shown in the examples above. The preferred materials are titanium and titanium alloys. The vias can be fabricated in one or more layers using mechanical drilling, electric-discharge machining (EDM) hole drilling, or laser hole drilling. The channels can be fabricated in one or more separate physical substrate layers using mechanical milling, wire EDM or electrochemical l micromachining (EMM). The substrate layers containing the vias and channels can be stacked, aligned and joined using diffusion bonding to form hermetically sealed fluidic channels. Channels having square or rectangular cross sections, such as the ones shown in FIGS. 7, 8, 9, and 10, can be fabricated using mechanical milling. When there is no variation in channel height (FIGS. 7 & 8), wire EDM can alternatively be used to create the channel. The channels with the rounded cross-sections of FIGS. 12A and 14A can be fabricated using EMM. In the case of FIG. 12A, the channel can be fabricated in a single layer. In the case of FIG. 14A, half of the channel can be fabricated in one layer that also contains the vias, the other half can be fabricated in a second layer, and an approximately elliptical cross-section can be achieved by precise alignment of the two layers.

Accordingly, other implementations are within the scope of the following claims.

**Claims**

1.    A planar micro fluidic chemical separation device (200) defining:

    a substrate having a chromatographic separation channel (204) located in the plane of the device (200); and
    a via (203) situated perpendicular to the separation channel (204) and extending between the separation channel (204) and an outer surface of the substrate for fluid communication with the separation channel (204),
    wherein the via (203) has a cross-sectional area that is less than a cross-sectional area of a first region of the separation channel (204) to inhibit band-broadening caused by passage of a sample band through the via (203).

2.    The device (200) of claim 1, wherein the cross-sectional area of the via (203) is 1.7 times to 9.0 times smaller than the cross-sectional area of the first region of the separation channel (204).

3.    The device (200) of claim 2 wherein the cross-sectional area of the via (204) is 4.0 times smaller than the cross-sectional area of the first region of the separation channel (204).

4.    The device (200) of claim 1, wherein the first region of the separation channel (204) accounts for 90% to 99% of the length of the channel (204).

5.    The device (200) of claim 1, wherein the separation channel (204) has a second region extending between the first region and the via (203), the second region having a channel width that narrows towards a junction with the via (203).

6.    The device (200) of claim 1 or 5, wherein the separation channel (204) has a second region extending between the first region and the via (203), the second region having a channel height that narrows towards a junction with the via (203).

7.    The device (200) of claim 6, wherein the separation channel (204) narrows from a first channel height in the first region to a second channel height in the second region that is 10% to 50% smaller than the first channel height, preferably wherein the second channel height is 25% smaller than the first channel height.

8.    The device (200) of claim 1, wherein the substrate comprises porous particles disposed within the separation channel (204).

9.    The device (200) of claim 1, wherein the substrate comprises a first substrate layer (201) defining at least part of the separation channel (204) and a second substrate layer (202) which overlies the first substrate layer and defines the via (203).

10.    The device (200) of claim 1, wherein the separation channel (204) has a square, rectangular or rounded cross-sectional shape.

11.    The device (200) of claim 1, wherein the separation channel (204) terminates at a rounded corner at the junction with the via (203) for inhibiting stagnation of fluid flow at the junction.

12.    A method comprising :

delivering a mobile phase fluid carrying a sample band through a first via (203) in a substrate so as to drive the sample through a chromatographic separation channel (204) defined by the substrate, such that components of the sample band are separated and subsequently driven out through a second via (203) in the substrate, wherein the first and second vias (203) are situated perpendicular to the separation channel (204), extend between the separation channel (204) and an outer surface of the substrate, and have cross-sectional areas that are less than a cross-sectional area of a first region of the separation channel (204) thereby inhibiting band-broadening caused by passage of the sample band through the first and second vias (203).

13. A method of forming a planar micro fluidic chemical separation device, the method comprising:

forming a pair of vias (203) in a first substrate layer (201);
forming a first groove in a second substrate layer (202); and
connecting the first substrate layer (201) and the second substrate layer (202) to form a substrate and such that the first groove forms at least a portion of an enclosed chromatrographic separation channel (204) and the vias (203) allow for fluid communication with the separation channel (204),
wherein the vias (203) are situated perpendicular to the separation channel (204), extend between the separation channel (204) and an outer surface of the substrate, and have cross-sectional areas that are less than a cross-sectional area of a first region of the separation channel (204) thereby inhibiting band-broadening caused by passage of a sample band through the vias (203).

14. The method of claim 13, further comprising:

forming tapered regions at terminal ends of the first groove such that the separation channel (204) tapers in transition regions interfacing with the vias (203).

15. The method of claim 13, further comprising:

forming a second groove in the first substrate layer (201) such that, when the first (201) and second (202) substrate layers are connected, the first and second grooves together form the enclosed separation channel (204), preferably further comprising:

forming tapered regions at terminal ends of the second groove such that the separation channel (204) tapers in transition regions interfacing with the vias (203), preferably further comprising:

forming tapered regions at terminal ends of the first and second grooves such that the separation channel (204) tapers in transition regions interfacing with the vias (203).

## Patentansprüche

1. Planare mikrofluidische chemische Trennvorrichtung (200), die Folgendes definiert:

ein Substrat aufweisend einen chromatographischen Trennkanal (204), der sich in der Ebene der Vorrichtung (200) befindet; und
ein Kontaktloch (203), das senkrecht zum Trennkanal (204) gelegen ist und zwischen dem Trennkanal (204) und einer Außenfläche des Substrats zur Fluidverbindung mit dem Trennkanal (204) verläuft,
worin das Kontaktloch (203) eine Querschnittsfläche aufweist, die weniger als eine Querschnittsfläche eines ersten Bereichs der Trennkanals (204) ist, um vom Durchgang eines Probenbands durch das Kontaktloch (203) hindurch verursachte Bandverbreiterung zu inhibieren.

2. Vorrichtung (200) nach Anspruch 1, worin die Querschnittsfläche des Kontaktlochs (203) 1,7-mal bis 9,0-mal kleiner als die Querschnittsfläche des ersten Bereichs des Trennkanals (204) ist.

3. Vorrichtung (200) nach Anspruch 2, worin die Querschnittsfläche des Kontaktlochs (204) 4,0-mal kleiner als die Querschnittsfläche des ersten Bereichs des Trennkanals (204) ist.

4. Vorrichtung (200) nach Anspruch 1, worin der erste Bereich des Trennkanals (204) 90 % bis 99 % der Länge des Kanals (204) ausmacht.

5. Vorrichtung (200) nach Anspruch 1, worin der Trennkanal (204) einen zweiten Bereich aufweist, der zwischen dem ersten Bereich und dem Kontaktloch (203) verläuft, wobei der zweite Bereich eine Kanalbreite aufweist, die sich hin zu einer Verbindung mit dem Kontaktloch (203) verengt.

6. Vorrichtung (200) nach Anspruch 1 oder 5, worin der Trennkanal (204) einen zweiten Bereich aufweist, der zwischen dem ersten Bereich und dem Kontaktloch (203) verläuft, wobei der zweite Bereich eine Kanalhöhe aufweist, die sich hin zu einer Verbindung mit dem Kontaktloch (203) verengt.

7. Vorrichtung (200) nach Anspruch 6, worin sich der Trennkanal (204) von einer ersten Kanalhöhe im ersten Bereich zu einer zweiten Kanalhöhe im zweiten Bereich, die 10 % bis 50 % kleiner als die erste Kanalhöhe ist, verengt, vorzugsweise, worin die zweite Kanalhöhe 25 % kleiner als die erste Kanalhöhe ist.

8. Vorrichtung (200) nach Anspruch 1, worin das Substrat innerhalb des Trennkanals (204) angeordnete poröse Partikel umfasst.

9. Vorrichtung (200) nach Anspruch 1, worin das Substrat eine erste Substratschicht (201), die mindestens einen Teil des Trennkanals (204) definiert, und eine zweite Substratschicht (202), die über der ersten Substratschicht liegt und das Kontaktloch (203) definiert, umfasst.

10. Vorrichtung (200) nach Anspruch 1, worin der Trennkanal (204) eine quadratische, rechteckige oder gerundete Querschnittsform aufweist.

11. Vorrichtung (200) nach Anspruch 1, worin der Trennkanal (204) an einer gerundeten Ecke an der Verbindung mit dem Kontaktloch (203) endet, um Stagnation des Fluidflusses an der Verbindung zu inhibieren.

12. Verfahren, umfassend:

Zuführen eines Mobilphasenfluids, das ein Probenband durch ein erstes Kontaktloch (203) in einem Substrat hindurch befördert, um die Probe durch einen vom Substrat definierten chromatographischen Trennkanal (204) hindurch zu treiben, sodass Komponenten des Probenbands getrennt und daraufhin durch ein zweites Kontaktloch (203) im Substrat hindurch herausgetrieben werden,
worin die ersten und zweiten Kontaktlöcher (203) senkrecht zum Trennkanal (204) gelegen sind, zwischen dem Trennkanal (204) und einer Außenfläche des Substrats verlaufen und Querschnittsflächen aufweisen, die weniger als eine Querschnittsfläche eines ersten Bereichs des Trennkanals (204) sind und dadurch vom Durchgang des Probenbands durch die ersten und zweiten Kontaktlöcher (203) hindurch verursachte Bandverbreiterung inhibieren.

13. Verfahren zum Herstellen einer planaren mikrofluidischen chemischen Trennvorrichtung, wobei das Verfahren Folgendes umfasst:

Herstellen eines Paars Kontaktlöcher (203) in einer ersten Substratschicht (201);
Herstellen einer ersten Nut in einer zweiten Substratschicht (202); und
Verbinden der ersten Substratschicht (201) und der zweiten Substratschicht (202), um ein Substrat herzustellen und sodass die erste Nut mindestens einen Abschnitt eines geschlossenen chromatographischen Trennkanals (204) bildet und die Kontaktlöcher (203) eine Fluidverbindung mit dem Trennkanal (204) vorsehen,
worin die Kontaktlöcher (203) senkrecht zum Trennkanal (204) gelegen sind, zwischen dem Trennkanal (204) und einer Außenfläche des Substrats verlaufen und Querschnittsflächen aufweisen, die weniger als eine Querschnittsfläche eines ersten Bereichs des Trennkanals (204) sind und dadurch vom Durchgang eines Probenbands durch die Kontaktlöcher (203) hindurch verursachte Bandverbreiterung inhibieren.

14. Verfahren nach Anspruch 13, ferner umfassend:

Herstellen konischer Bereiche an terminalen Enden der ersten Nut, sodass der Trennkanal (204) in mit den Kontaktlöchern (203) verbundenen Übergangsbereichen konisch ist.

15. Verfahren nach Anspruch 13, ferner umfassend:

Herstellen einer zweiten Nut in der ersten Substratschicht (201), sodass, wenn die ersten (201) und zweiten (202) Substratschichten verbunden sind, die ersten und zweiten Nuten zusammen den geschlossenen Trennkanal (204) bilden, vorzugsweise ferner umfassend:

Herstellen konischer Bereiche an terminalen Enden der zweiten Nut, sodass der Trennkanal (204) in mit den Kontaktlöchern (203) verbundenen Übergangsbereichen konisch ist, vorzugsweise ferner umfassend:

Bilden konischer Bereiche an terminalen Enden der ersten und zweiten Nuten, sodass der Trennkanal (204) in mit den Kontaktlöchern (203) verbundenen Übergangsbereichen konisch ist.

**Revendications**

1. Dispositif plan de séparation chimique microfluidique (200) définissant :

un substrat comportant un canal de séparation chromatographique (204) situé dans le plan du dispositif (200) ; et un trou de liaison (203) situé perpendiculairement au canal de séparation (204) et s'étendant entre le canal de séparation (204) et une surface extérieure du substrat pour une communication fluidique avec le canal de séparation (204),
le trou de liaison (203) ayant une section transversale inférieure à une section transversale d'une première région du canal de séparation (204) pour empêcher un élargissement de bande provoqué par le passage d'une bande d'échantillon par le trou de liaison (203).

2. Dispositif (200) selon la revendication 1, dans lequel la section transversale du trou de liaison (203) est 1,7 fois à 9 fois plus petite que la section transversale de la première région du canal de séparation (204).

3. Dispositif (200) selon la revendication 2, dans lequel la section transversale du trou de liaison (204) est 4 fois plus petite que la section transversale de la première région du canal de séparation (204).

4. Dispositif (200) selon la revendication 1, dans lequel la première région du canal de séparation (204) représente de 90 % à 99 % de la longueur du canal (204).

5. Dispositif (200) selon la revendication 1, dans lequel le canal de séparation (204) comporte une seconde région s'étendant entre la première région et le trou de liaison (203), la seconde région ayant une largeur de canal qui se rétrécit vers une jonction avec le trou de liaison (203).

6. Dispositif (200) selon la revendication 1 ou 5, dans lequel le canal de séparation (204) comporte une seconde région s'étendant entre la première région et le trou de liaison (203), la seconde région ayant une hauteur de canal qui se rétrécit vers une jonction avec le trou de liaison (203).

7. Dispositif (200) selon la revendication 6, dans lequel le canal de séparation (204) se rétrécit d'une première hauteur de canal dans la première région à une seconde hauteur de canal dans la seconde région qui est de 10 % à 50 % plus petite que la première hauteur de canal, la seconde hauteur de canal étant de préférence 25 % plus petite que la première hauteur de canal.

8. Dispositif (200) selon la revendication 1, dans lequel le substrat comprend des particules poreuses disposées dans le canal de séparation (204).

9. Dispositif (200) selon la revendication 1, dans lequel le substrat comprend une première couche de substrat (201) définissant au moins une partie du canal de séparation (204), et une seconde couche de substrat (202) qui recouvre la première couche de substrat et définit le trou de liaison (203).

10. Dispositif (200) selon la revendication 1, dans lequel le canal de séparation (204) a une section transversale de forme carrée, rectangulaire ou arrondie.

11. Dispositif (200) selon la revendication 1, dans lequel le canal de séparation (204) se termine à un coin arrondi au niveau de la jonction avec le trou de liaison (203) afin d'empêcher la stagnation d'un écoulement de fluide au niveau de la jonction.

**12.** Procédé consistant à :

fournir une phase mobile transportant une bande d'échantillon par un premier trou de liaison (203) dans un substrat de manière à diriger l'échantillon par un canal de séparation chromatographique (204) défini par le substrat, de sorte que les composants de la bande d'échantillon soient séparés puis dirigés par un second trou de liaison (203) dans le substrat,

dans lequel les premier et second trous de liaison (203) sont situés perpendiculairement au canal de séparation (204), s'étendent entre le canal de séparation (204) et une surface extérieure du substrat, et ont des sections transversales inférieures à une section transversale d'une première région du canal de séparation (204) pour empêcher un élargissement de bande provoqué par le passage de la bande d'échantillon par les premier et second trous de liaison (203).

**13.** Procédé de formation d'un dispositif plan de séparation chimique microfluidique, le procédé consistant à :

former une paire de trous de liaison (203) dans une première couche de substrat (201) ;
former une première gorge dans une seconde couche de substrat (202) ; et
connecter la première couche de substrat (201) et la seconde couche de substrat (202) afin de former un substrat et de telle sorte que la première gorge forme au moins une partie d'un canal de séparation chromatographique fermé (204) et que les trous de liaison (203) permette une communication fluidique avec le canal de séparation (204),

dans lequel les trous de liaison (203) sont situés perpendiculairement au canal de séparation (204), s'étendent entre le canal de séparation (204) et une surface extérieure du substrat, et ont des sections transversales inférieures à une section transversale d'une première région du canal de séparation (204) pour empêcher un élargissement de bande provoqué par le passage d'une bande d'échantillon par les trous de liaison (203).

**14.** Procédé selon la revendication 13, consistant en outre à :

former des régions coniques aux extrémités de la première gorge de sorte que le canal de séparation (204) soit conique dans les régions de transition s'interfaçant avec les trous de liaison (203).

**15.** Procédé selon la revendication 13, consistant en outre à :

former une seconde gorge dans la première couche de substrat (201) de sorte que lorsque les première (201) et seconde (202) couches de substrat sont connectées, les première et seconde gorges forment ensemble le canal de séparation fermé (204), de préférence consistant en outre à :

former des régions coniques aux extrémités de la seconde gorge de sorte que le canal de séparation (204) soit conique dans les régions de transition s'interfaçant avec les trous de liaison (203), de préférence consistant en outre à :

former des régions coniques aux extrémités des première et seconde gorges de sorte que le canal de séparation (204) soit conique dans les régions de transition s'interfaçant avec les trous de liaison (203).

FIG. 1

EP 2 718 709 B1

FIG. 2

FIG. 3

FIG. 4

300 →

302

t=1.5 sec

t=2.5 sec

t=2.0 sec

t=3.0 sec

303

304    305    301

FIG. 5

EP 2 718 709 B1

FIG. 6

EP 2 718 709 B1

FIG. 7

FIG. 8

FIG. 9

FIG. 10

EP 2 718 709 B1

EP 2 718 709 B1

FIG. 11A

FIG. 11B

EP 2 718 709 B1

FIG. 12A

1200

1201

1203

1202

1204

FIG. 12B

440 microns

200 microns

FIG. 13A

1203

1205

1201

FIG. 13B

FIG. 14A

1400 →

1404

1401

1402

FIG. 14B

280 microns

320 microns

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

* US 6595144 B1

### Non-patent literature cited in the description

* **P. GZIL ; N. VERVOORT ; G. BARON ; G. DESMET.** Advantages of perfectly ordered 2D porous pillar arrays over packed bed columns for LC separations: A theoretical analysis. *Analytical Chemistry,* 2003, vol. 75, 6244-6250